# EUROPÄISCHE PATENTSCHRIFT

(11) **EP 2 866 285 B1**
(45) Veröffentlichungstag und Bekanntmachung des Hinweises auf die Patenterteilung: **16.01.2019**
(21) Anmeldenummer: 13189908.0
(22) Anmeldetag: 23.10.2013
(51) Int. Cl.: H01M 4/66, H01M 10/0525

(54) **Lithium-Ionen-Batterien und Verfahren zu ihrer Herstellung**
Lithium ion batteries and method for their manufacture
Batteries lithium-ion et leur procédé de fabrication

(43) Veröffentlichungstag der Anmeldung: 29.04.2015
(73) Patentinhaber: VARTA Microbattery GmbH, 73479 Ellwangen (DE)
(72) Erfinder: Krebs, Martin, 73494 Rosenberg (DE)
(74) Vertreter: Patentanwaltskanzlei Cartagena

(56) Entgegenhaltungen:
- JP-A- H0 536 401
- JP-A- 2007 026 910
- US-A1- 2011 236 756

## Beschreibung

### Anwendungsgebiet und Stand der Technik

Die hier beschriebene Erfindung betrifft ein Verfahren zur Herstellung von Lithium-Ionen-Batterien und gemäß dem Verfahren herstellbare Lithium-Ionen-Batterien.

Batterien sind in den unterschiedlichsten Ausführungsformen bekannt. Unter dem Begriff Batterie sollen vorliegend sowohl galvanische Einzelzellen als auch die Zusammenschaltung mehrerer bevorzugt gleichartiger galvanischer Einzelzellen verstanden werden.

Unter anderem gibt es auch sogenannte gedruckte Batterien, bei deren Herstellung zumindest einige Funktionsteile, insbesondere die Elektroden, durch Druck hergestellt werden. In der Regel weisen gedruckte Batterien einen mehrschichtigen Aufbau auf. In herkömmlicher Bauweise umfasst eine gedruckte Batterie zwei Elektrodenschichten sowie eine dazwischen angeordnete, die Elektrodenschichten räumlich trennende Separatorschicht. Ein solcher stapelartiger Aufbau ist beispielsweise der US 4,119,770 zu entnehmen. Flachere Batterien, bei denen sich die Elektroden nebeneinander auf einem flächigen, elektrisch nicht leitenden Substrat befinden, sind der WO 2006/105966 zu entnehmen. Hier sind die Elektroden mit einem ionenleitfähigen Elektrolyten abgedeckt, der jedoch keine trennende Funktion hat.

Als Ableiter für gedruckte Batterien kommen beispielsweise Metallfolien oder alternativ Folien, auf die mittels eines Metallisierungsprozesses eine metallische Ableiterstruktur aufgebracht wurde, zum Einsatz. Für die negativen Elektroden von Lithium-Ionen-Batterien ist vor allem Kupferfolie als Ableiter geeignet. Aus der JP H05 36401 A sind ferner auch Ableiter aus Bronze und Messing genannt.

Aus der US 2011/0236756 A1 sind Ableiter für Lithium-Ionen-Batterien beschrieben, die eine Zinn oder eine Zinn-Kupfer-Kombination umfassen können. Die Ableiter sind durch galvanische Abscheidung gebildet.

Besonders vorteilhaft ist es, wenn nicht nur Elektroden und Separatoren sondern auch Ableiter für die gedruckten Elektroden gedruckt werden. Hierfür finden Druckzusammensetzungen Verwendung, die elektrisch leitfähige Partikel sowie ein Lösungs- bzw. Dispergiermittel enthalten. Nach Verdunsten des Lösungs- bzw. Dispergiermittels bleiben die elektrisch leitfähigen Partikel zurück und bilden eine leitfähige Struktur aus. Diese kann mit einer Elektrodenschicht überdruckt werden und dient zur elektrischen Kontaktierung dieser Schicht.

### Aufgabe und Lösung

Probleme treten beim Druck von Kupferableitern für die negativen Elektroden von Lithium-Ionen-Batterien auf. Die Oberfläche von Kupfergegenständen oxidiert bekanntlich sehr leicht. Bei Kupferfolien hat dies keine wesentlichen Auswirkungen auf deren elektrische Leitfähigkeit, da ihr Inneres durch die oberflächliche Oxidation nicht tangiert wird. Wesentlich drastischer sind die Auswirkungen hingegen bei durch Druck hergestellten Kupferableitern. Diese bestehen im Wesentlichen aus aneinander liegenden, in direktem Kontakt zueinander stehenden Kupferpartikeln. Wenn diese oberflächlich oxidieren, treten an den Berührungspunkten der Partikel große elektrische Widerstände auf, was die Leitfähigkeit des Kupferableiters stark herabsetzen kann.

Eine Lösung für dieses Problem bietet die nachstehend beschriebene Erfindung, insbesondere das Verfahren gemäß Anspruch 1. Bevorzugte Ausführungsformen des Verfahrens sind in den abhängigen Ansprüchen 2 bis 5 angegeben. Auch die Batterie mit den Merkmalen des Anspruchs 6 trägt zur Lösung bei und ist Bestandteil der Erfindung. Der Wortlaut sämtlicher Ansprüche wird hiermit durch Bezugnahme zum Inhalt dieser Beschreibung gemacht.

Das erfindungsgemäße Verfahren dient zur Herstellung von Lithium-Ionen-Batterien. Es umfasst stets die folgenden fünf Schritte:
(A) Bildung einer schichtförmigen negativen Elektrode (kurz: einer negativen Elektrodenschicht)
(B) Bildung einer schichtförmigen positiven Elektrode (kurz: einer positiven Elektrodenschicht)
(C) Bereitstellung einer Ableiterstruktur für die gemäß Schritt (A) hergestellte negative Elektrodenschicht
(D) Bereitstellung einer Ableiterstruktur für die für die gemäß Schritt (B) hergestellte positive Elektrodenschicht und
(E) Bereitstellung einer Separatorschicht zur Trennung der gemäß Schritt (A) und (B) hergestellten Elektrodenschichten.

Besonders zeichnet sich das erfindungsgemäße Verfahren dadurch aus, dass die Ableiterstruktur für die negative Elektrodenschicht durch Druck gebildet wird und dass dabei zum Drucken eine Druckzusammensetzung (kann auch als Tinte bezeichnet werden) verwendet wird, die Partikel aus einer Kupfer/Zink- und/oder aus einer Kupfer/Zinn-Legierung enthält.

Bevorzugt werden Kupfer-Zink- und Kupfer/Zinn-Legierungen mit einem Kupferanteil von wenigstens 58 Gew.-% verwendet. Es können sind allerdings auch Legierungen mit geringerem Kupferanteil eingesetzt werden, beispielsweise mit einem Anteil zwischen 25 Gew.-% und 55 Gew.-%.

Es wurde gefunden, dass aus Druckzusammensetzungen mit solchen Partikeln hergestellte Ableiterstrukturen eine bessere elektrische Leitfähigkeit aufweisen als die eingangs beschriebenen, unter Verwendung von Kupferpartikeln hergestellten Strukturen. Partikel aus den genannten Legierungen sind weniger korrosionsanfällig als Partikel aus reinem Kupfer. Das beschriebene Problem konnte so gelöst werden.

Auch die Elektrodenschichten und die Separatorschicht werden im Rahmen des beschriebenen Verfahrens bevorzugt durch Druck gebildet.

Bevorzugt kommt sowohl bei der Bildung der Ableiterstrukturen als auch bei der Herstellung der Elektrodenschichten als Druckverfahren ein Siebdruckverfahren zum Einsatz. Beim Siebdruck handelt es sich bekanntlich um ein Druckverfahren, bei dem Druckzusammensetzungen mittels eines Rakels durch ein feinmaschiges Gewebe hindurch auf das zu bedruckende Material gepresst werden. An denjenigen Stellen des Gewebes, an denen dem Druckbild entsprechend keine Druckzusammensetzung aufgedruckt werden soll, werden die Maschenöffnungen des Gewebes durch eine Schablone undurchlässig gemacht. An den übrigen Stellen sollte die Druckzusammensetzung dagegen die Maschenöffnungen problemlos durchdringen können. Damit es nicht zu einem Verstopfen der Maschenöffnungen kommen kann, sollten die in der Druckzusammensetzung enthaltenen festen Bestandteile eine gewisse Maximalgröße, die unter der Maschenöffnungsweite liegen sollte, nicht überschreiten.

### • Schritte (A) und (B)

Zur Herstellung der Elektrodenschichten werden vorzugsweise Druckzusammensetzungen bereitgestellt, die ein Dispergiermittel, in dem Dispergiermittel dispergierte, elektrochemisch aktive Partikel und gegebenenfalls einen Leitfähigkeitsverbesserer enthalten.

Als elektrochemisch aktive Partikel für die positive Elektrodenschicht können beispielsweise Partikel aus Lithiumkobaltoxid (LiCoO₂), Titanat (Li₂TiO₃), Mangandioxid (MnO₂), Eisendisulfid (FeS₂), LiMn₂O₄-Spinell, Lithiumeisenphosphat (LiFePO₄) und Derivate wie beispielsweise LiNi_{1/3}Mn_{1/3}Co_{1/3}O₂ oder LiMnPO₄. eingesetzt werden. Als elektrochemisch aktive Partikel für die negative Elektrode eignen sich beispielsweise Partikel auf Kohlenstoffbasis wie graphitischer Kohlenstoff oder zur Interkalation von Lithium befähigte nicht-graphitische Kohlenstoffmaterialien. Weiterhin können auch metallische und halbmetallische Materialien zum Einsatz kommen, die mit Lithium legierbar oder legiert sind. So sind beispielsweise die Elemente Zinn, Antimon und Silizium in der Lage, mit Lithium intermetallische Phasen zu bilden. Auch Partikel aus metallischem Lithium können eingesetzt werden, insbesondere Partikel, deren Oberfläche passiviert ist.

Als Leitfähigkeitsverbesserer eignen sich beispielsweise Rußpartikel oder Metallpartikel.

Bei dem Dispergiermittel in den Druckzusammensetzungen zur Herstellung der Elektrodenschichten handelt es sich in bevorzugten Ausführungsformen um ein polares Dispergiermittel, beispielsweise um Wasser. Grundsätzlich können jedoch auch nicht-wässrige aprotische Lösungsmittel verwendet werden, wie sie beispielsweise aus dem Bereich der Lithium-Ionen-Batterien bekannt sind, beispielsweise N-Methylpyrrolidon (NMP) oder N-Ethlpyrrolidon (NEP) oder Aceton.

Neben dem Dispergiermittel, den elektrochemisch aktiven Partikeln und dem Leitfähigkeitsverbesserer können die Druckzusammensetzungen zur Herstellung der Elektrodenschichten zusätzlich noch einen Binder und/oder ein oder mehrere Additive umfassen. Während der Binder insbesondere dazu dient, den aus den Druckzusammensetzungen herstellbaren Elektrodenschichten eine bessere mechanische Stabilität, idealerweise eine bessere mechanische Belastbarkeit und Flexibilität zu verleihen, dienen die Additive insbesondere dazu, die Verarbeitungseigenschaften der Druckzusammensetzung zu variieren. Beispielsweise können Rheologiehilfsmittel zum Einsatz kommen, mit denen die Viskosität der Druckzusammensetzung angepasst werden kann. Als Binder kommen beispielsweise PVDF-basierte Binder (PVDF = Polyvinylidenfluorid), Polyacrylate, Polyimid-Harze, CMC (Carboxymethylzellulose) und SBR (Styrol-Butadien-Kautschuk) in Frage.

Der Feststoffanteil in den Druckzusammensetzungen zur Herstellung der Elektrodenschichten liegt bevorzugt zwischen 10 Gew.-% und 75 Gew.-%. Die elektrochemischen Partikel machen den größten Teil (> 80 Gew.-%, bevorzugt > 90 Gew.-%) des Feststoffanteils aus. Die Anteile der übrigen festen Komponenten liegen bevorzugt jeweils im einstelligen Prozentbereich (bezogen auf den Feststoffanteil).

### • Schritt (C)

Auch die zur Herstellung der Ableiterstruktur für die negative Elektrodenschicht verwendeten Druckzusammensetzungen enthalten in der Regel, neben den genannten Legierungspartikeln, weitere Komponenten, darunter meist ebenfalls ein Dispergiermittel. Weiterhin sind bevorzugt auch ein Binder und/oder ein Leitfähigkeitsverbesserer und/oder ein Additiv zur Beeinflussung der Verarbeitungseigenschaften der Druckzusammensetzung oder der Ableiterstruktur enthalten.

Als Dispergiermittel kommt, wie im Fall der Druckzusammensetzungen zur Herstellung der Elektrodenschichten, bevorzugt Wasser oder ein organisches aprotisches Lösungsmittel zum Einsatz. Geeignet sind weiterhin auch N-Methylpyrrolidon (NMP) oder N-Ethlpyrrolidon (NEP) oder Aceton. Die Additive und Binder können die gleichen sein wie die bereits im Zusammenhang mit den Druckzusammensetzungen zur Herstellung der Elektrodenschichten beschriebenen. In Frage kommen beispielsweise PVDF-basierte Binder (PVDF = Polyvinylidenfluorid), Polyacrylate, Polyimid-Harze, CMC (Carboxymethylzellulose) und SBR (Styrol-Butadien-Kautschuk).

Als Leitfähigkeitsverbesserer eignen sich beispielsweise Rußpartikel oder Metallpartikel.

Die Druckzusammensetzung zur Herstellung der Ableiterstruktur enthält das Dispergiermittel bevorzugt in einem Anteil zwischen 25 und 75 Gew.-%. Die übrigen, bereits genannten Bestandteile der Druckzusammensetzung sind bevorzugt in den folgenden Anteilen enthalten:
- zwischen 25 und 75 Gew.-% der Legierungspartikel,
- zwischen 0,1 Gew.-% und 10 Gew.-% des Binders, und
- zwischen 0 und 10 Gew.-% des Leitfähigkeitsverbesserers, und
- zwischen 0 und 10 Gew.-%, bevorzugt zwischen 0,1 Gew.-% und 5 Gew.-% der Additive.

Die Prozentangaben beziehen sich jeweils auf die Gesamtmasse der Druckzusammensetzung einschließlich Dispergiermittel)

Besonders bevorzugt enthält die Druckzusammensetzung zur Herstellung der Ableiterstruktur als Additiv mindestens einen Korrosionsinhibitor. Ein möglicher Korrosionsinhibitor sind beispielsweise Benzotriazol oder Tolytriazol. Nach dem Verdunsten des Dispergiermittels bleiben diese Korrosionsinhibitoren als dünner Film auf der Oberfläche der Partikel aus der Kupfer/Zink- und/oder aus der Kupfer/Zinn-Legierung zurück und schützen diese zusätzlich vor Korrosion.

Durch den Einsatz dieser Korrosionsinhibitoren wurden die Ergebnisse des erfindungsgemäßen Verfahrens noch weiter verbessert. So hergestellte Ableiterstrukturen zeigten auch im laufenden Betrieb eine allenfalls geringe Korrosionsneigung.

### • Schritt (D)

Die Ableiterstruktur für die positive Elektrode weist als elektrische leitende Komponente bevorzugt Aluminium auf. Sie wird bevorzugt durch Druck gebildet oder durch Abscheidung von Aluminium aus der Gasphase.

Wenn die Ableiterstruktur für die positive Elektrode durch Druck gebildet wird, so wird zum Drucken eine Druckzusammensetzung verwendet, die Aluminium-Partikel aufweist. An Stelle der Aluminiumpartikel kann die Zusammensetzung natürlich aber auch andere elektrisch leitende Partikel aufweisen, beispielsweise Partikel aus Nickel oder Silber, Gold, Kupfer oder Nickel. Die Druckzusammensetzung umfasst daneben noch weitere Komponenten wie ein Dispergiermittel. Weiterhin sind bevorzugt auch ein Binder und/oder ein Leitfähigkeitsverbesserer und/oder ein Additiv zur Beeinflussung der Verarbeitungseigenschaften der Druckzusammensetzung oder der Ableiterstruktur enthalten.

Als Dispergiermittel kommt wie im Fall der Druckzusammensetzungen zur Herstellung der Ableiterstruktur für die negative Elektrodenschicht bevorzugt Wasser oder ein organisches aprotisches Lösungsmittel zum Einsatz. Geeignet sind weiterhin auch N-Methylpyrrolidon (NMP) oder N-Ethlpyrrolidon (NEP) oder Aceton.

Die Additive und Binder können die gleichen sein wie die in Schritt (C) verwendbaren. In Frage kommen auch hier beispielsweise PVDF-basierte Binder (PVDF = Polyvinylidenfluorid), Polyacrylate, Polyimid-Harze, CMC (Carboxymethylzellulose) und SBR (Styrol-Butadien-Kautschuk).

Als Leitfähigkeitsverbesserer eignen sich beispielsweise Rußpartikel oder Metallpartikel.

Die Druckzusammensetzung zur Herstellung der Ableiterstruktur enthält das Dispergiermittel gegebenenfalls in einem Anteil zwischen 25 und 75 Gew.-%. Die übrigen, bereits genannten Bestandteile der Druckzusammensetzung sind dann bevorzugt in den folgenden Anteilen enthalten:
- zwischen 25 und 75 Gew.-% der elektrisch leitenden Partikel,
- zwischen 0,1 und 10 Gew.-% des Binders, und
- zwischen 0 und 10 Gew.-% des Leitfähigkeitsverbesserers, und
- zwischen 0 und 10 Gew.-%, bevorzugt zwischen 0,1 Gew.-% und 5 Gew.-% der Additive.

Die Prozentangaben beziehen sich jeweils auf die Gesamtmasse der Druckzusammensetzung einschließlich Dispergiermittel)

Gegebenenfalls kann auch die Druckzusammensetzung zur Herstellung der Ableiterstruktur für die positive Elektrodenschicht als Additiv mindestens einen Korrosionsinhibitor wie beispielsweise Benzotriazol oder Tolytriazol enthalten.

### • Schritt (E)

Zur Bereitstellung einer Separatorschicht wird vorzugsweise eine Druckpaste bereitgestellt, die ein Lösungsmittel, mindestens ein Leitsalz, das in dem Lösungsmittel gelöst ist, sowie Partikel und/oder Fasern, die in dem Lösungsmittel bei Raumtemperatur zumindest nahezu, vorzugsweise vollständig, unlöslich und dabei elektrisch nicht leitend sind. Das mindestens eine Leitsalz übernimmt dabei die Funktion eines lonenleiters, die Partikel und/oder die Fasern die Funktion eines Abstandshalters.

Geeignete Druckpasten zur Herstellung der Separatorschicht sind beispielsweise in der WO 2011/131627 A1 beschrieben, auf deren diesbezüglichen Inhalt hiermit Bezug genommen wird. In dieser Druckschrift sind die genannten Druckpastenbestandteile ausführlich beschrieben.

Bevorzugt ist, dass die in den Druckzusammensetzungen zur Herstellung der Elektrodenschichten / Separatorschicht / Ableiterstrukturen enthaltenen Partikel einen mittleren Durchmesser zwischen 1 µm und 50 µm aufweisen. Besonders bevorzugt sind die Druckzusammensetzungen dabei frei von Partikeln, die einen Durchmesser und/oder eine Länge von mehr als 120 µm aufweisen. Idealerweise liegt der maximale Durchmesser der in den Druckzusammensetzungen enthaltenen Partikel bei 80 µm.

Zur Herstellung einer Lithium-Ionen-Batterie kann beispielsweise zuerst die Ableiterstruktur für die Elektroden auf ein elektrisch nichtleitendes Substrat aufgedruckt und anschließend mit der negativen Elektrodenschicht überdruckt werden. Alternativ kann die negative Elektrodenschicht mit der Ableiterstruktur bedruckt werden.

Gemäß dem erfindungsgemäßen Verfahren hergestellte Lithium-Ionen-Batterien umfassen
- mindestens eine negative Elektrodenschicht,
- mindestens eine positive Elektrodenschicht,
- mindestens eine Ableiterstruktur für die negative Elektrodenschicht,
- mindestens eine Ableiterstruktur für die positive Elektrodenschicht und
- mindestens eine Separatorschicht zur Trennung der negativen und der positiven Elektrodenschicht.

Die Ableiterstruktur für die negative Elektrodenschicht enthält dabei Partikel aus einer Kupfer/Zink- oder aus einer Kupfer/Zinn-Legierung sowie einen Binder und/oder einen Leitfähigkeitsverbesserer.

Die Elektroden- und Separatorschichten sowie die Ableiterstrukturen sind aus den oben beschriebenen Druckzusammensetzungen erhältlich und entsprechend in ihrer Zusammensetzung auch über diese definiert.

Besonders bevorzugt sind die genannten Schichten und Strukturen in einer der folgenden Sequenzen angeordnet:
- Ableiterstruktur für die negative Elektrodenschicht / negative Elektrodenschicht / Separatorschicht / positive Elektrodenschicht / Ableiterstruktur für die positive Elektrodenschicht
- negative Elektrodenschicht / Ableiterstruktur für die negative Elektrodenschicht / Separatorschicht / Ableiterstruktur für die positive Elektrodenschicht / positive Elektrodenschicht

Die erfindungsgemäße Batterie kann wiederaufladbar oder nicht wiederaufladbar sein.

### Ausführungsbeispiel

Weitere Vorteile und Aspekte der Erfindung ergeben sich außer aus den Ansprüchen auch aus der nachfolgenden Beschreibung eines bevorzugten Ausführungsbeispiels der Erfindung.
(1) Auf eine erste, 100 µm dicke Aluminium-Polymer-Verbundfolie mit einer außenliegenden Polyethylenschicht, einer außenliegenden Polyamidschicht und einer dazwischen liegenden Schicht aus Aluminium wurde eine Ableiterstruktur aus einer Kupfer/ZinnLegierung aufgebracht. Die Struktur wurde mittels Siebdruck auf der außenliegenden Polyethylenschicht ausgebildet. Hierbei kam eine Druckzusammensetzung zum Einsatz, die die folgenden Komponenten aufwies:
   - 35 Gew.-% Bronze- oder Messingpartikel mit einer maximalen Partikelgröße von 50 µm,
   - 5 Gew.-% einer wässrigen Polyacrylatdispersion,
   - 5 Gew.-% Russpartikel und
   - 55 Gew.-% Aceton.
(2) Auf eine zweite, 100 µm dicke Aluminium-Polymer-Verbundfolie mit einer außenliegenden Polyethylenschicht, einer außenliegenden Polyamidschicht und einer dazwischen liegenden Schicht aus Aluminium wurde eine Ableiterstruktur aus einer Nickel-Legierung aufgebracht. Die Struktur wurde mittels Siebdruck auf der außenliegenden Polyethylenschicht ausgebildet. Hierbei kam eine Druckzusammensetzung zum Einsatz, die die folgenden Komponenten aufwies:
   - 35 Gew.-% Nickelpartikel mit einer maximalen Partikelgröße von 50 µm,
   - 5 Gew.-% einer wässrigen Polyacrylatdispersion,
   - 5 Gew.-% Russpartikel und
   - 55 Gew.-% Aceton.
(3) Nach einem Trocknungsvorgang, bei dem sämtliches Aceton und Wasser aus der Struktur entfernt wurde, wurde die gemäß (1) gebildete Struktur zur Bildung einer negativen Elektrode unter Ausbildung einer durchgehenden Schicht aus graphitischem Kohlenstoff überdruckt. Die Schicht bestand aus einer Matrix aus CMC sowie aus Graphitpartikeln mit einer mittleren Partikelgröße von 25 µm und wies eine Dicke von ca. 100 µm auf.
(4) Nach einem Trocknungsvorgang, bei dem sämtliches Aceton und Wasser aus der Struktur entfernt wurde, wurde die gemäß (2) gebildete Struktur zur Bildung einer positiven Elektrode unter Ausbildung einer durchgehenden Schicht aus Lithiumkobaltoxid überdruckt. Die Schicht bestand aus einer Matrix aus CMC sowie aus Graphitpartikeln mit einer mittleren Partikelgröße von 25 µm und wies eine Dicke von ca. 100 µm auf.
(5) In einem nächsten Schritt wurde die gemäß (3) gebildete negative Elektrode, wiederum nach einer Trocknung, mit einer 100 µm dicken Separatorschicht überdruckt. Hierbei kam eine Druckzusammensetzung zum Einsatz, die neben einem PVDF-basierten Binder NEP als Dispergiermittel sowie in einem Gewichtsanteil von rund 40 Gew.-% Calciumcarbonat enthielt. Das verwendete Calciumcarbonatpulver bestand zu ca. 50 % aus einem Pulver mit einer mittleren Korngröße < 11 µm und zu ca. weiteren 50 % aus einem Pulver mit einer mittleren Korngröße < 23 µm. Es wies also eine bimodale Verteilung auf.
(6) Nach Trocknen der Separatorschicht wurden die in den Schritten (3) und (5) gebildeten Halbzellen zu einer Zelle kombiniert. Hierbei wurden die beiden in (1) und (2) eingeführten Verbundfolien zu einem geschlossenen Gehäuse vereinigt. Die Polyethylenschichten der Verbundfolien bilden nun die Innenseite des Gehäuses. Zuvor waren die Elektrodenschichten und die Separatorschicht mit einer organischen Elektrolytlösung getränkt worden, welche Lithiumtetrafluoroborat als Leitsalz enthielt.

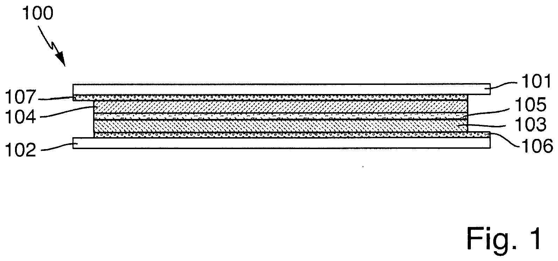

Ein Querschnitt der gemäß dem Ausführungsbeispiel hergestellten Batterie 100 ist in Fig. 1 dargestellt. Diese umfasst ein Gehäuse bestehend aus den zwei Verbundfolien 101 und 102. Auf die Verbundfolie 101 ist die im Wesentlichen aus einer Kupfer/Zinn-Legierung bestehende Ableiterstruktur 107 aufgebracht. Auf die Verbundfolie 102 ist die im Wesentlichen aus Nickel bestehende Ableiterstruktur 106 aufgebracht. Die Ableiterstrukturen 106 und 107 sind mit der negativen Elektrodenschicht 104 und der positiven Elektrodenschicht 103 abgedeckt. Zwischen den Elektrodenschichten (103) und (104) ist die Separatorschicht 105 angeordnet.

## Patentansprüche

1. Verfahren zur Herstellung von Lithium-Ionen-Batterien, umfassend die Schritte
- Bildung einer negativen Elektrodenschicht,
- Bildung einer positiven Elektrodenschicht,
- Bereitstellung einer Ableiterstruktur für die negative Elektrodenschicht,
- Bereitstellung einer Ableiterstruktur für die positive Elektrodenschicht und
- Bereitstellung einer Separatorschicht zur Trennung der negativen und der positiven Elektrodenschicht,
wobei die Ableiterstruktur für die negative Elektrode durch Druck gebildet wird und wobei zum Drucken eine Druckzusammensetzung verwendet wird, die Partikel aus einer Kupfer/Zink- und/oder aus einer Kupfer/Zinn-Legierung enthält.

2. Verfahren nach Anspruch 1, **dadurch gekennzeichnet, dass** die Druckzusammensetzung neben den Legierungspartikeln mindestens eine der folgenden Komponenten enthält:
- ein Lösungs- bzw. Dispergiermittel,
- einen Binder,
- einen Leitfähigkeitsverbesserer und
- Additive zur Beeinflussung der Verarbeitungseigenschaften der Druckzusammensetzung und/oder der Eigenschaften der Ableiterstruktur.

3. Verfahren nach Anspruch 2, **dadurch gekennzeichnet, dass** die Druckzusammensetzung
- zwischen 0,1 und 10 Gew.-% des Binders,
- zwischen 25 und 75 Gew.-% der Legierungspartikel,
- zwischen 0 und 10 Gew.-% des Leitfähigkeitsverbesserers und
- zwischen 0 und 10 Gew.-% der Additive
enthält, wobei sich die Prozentangaben jeweils auf die Gesamtmasse der Druckzusammensetzung einschließlich Lösungs- bzw. Dispergiermittel beziehen.

4. Verfahren nach einem der Ansprüche 1 bis 3, **dadurch gekennzeichnet, dass** die Druckzusammensetzung als Additiv mindestens einen Korrosionsinhibitor enthält.

5. Verfahren nach einem der vorhergehenden Ansprüche, **dadurch gekennzeichnet, dass** die Ableiterstruktur für die negative Elektrode auf ein elektrisch nichtleitendes Substrat aufgedruckt und anschließend mit der negativen Elektrodenschicht überdruckt wird oder umgekehrt.

6. Lithium-Ionen-Batterie, umfassend
- eine negative Elektrodenschicht,
- eine positive Elektrodenschicht,
- eine Ableiterstruktur für die negative Elektrodenschicht,
- eine Ableiterstruktur für die positive Elektrodenschicht und
- eine Separatorschicht zur Trennung der negativen und der positiven Elektrodenschicht,
wobei die Ableiterstruktur für die negative Elektrodenschicht Partikel aus einer Kupfer/Zink- oder aus einer Kupfer/Zinn-Legierung sowie einen Binder und/oder einen Leitfähigkeitsverbesserer enthält.

## Claims

1. Process for producing lithium ion batteries, comprising the steps of
- forming a negative electrode layer,
- forming a positive electrode layer,
- providing an output conductor structure for the negative electrode layer,
- providing an output conductor structure for the positive electrode layer and
- providing a separator layer to separate the negative and positive electrode layers,
wherein the output conductor structure for the negative electrode is formed by printing and wherein a printing composition comprising particles of a copper/zinc alloy and/or of a copper/tin alloy is used for printing.

2. Process according to Claim 1, **characterized in that** the printing composition, as well as the alloy particles, comprises at least one of the following components:
- a solvent or dispersant,
- a binder,
- a conductivity improver and
- additives for influencing the processing properties of the printing composition and/or the properties of the output conductor structure.

3. Process according to Claim 2, **characterized in that** the printing composition contains
- between 0.1% and 10% by weight of the binder,
- between 25% and 75% by weight of the alloy particles,
- between 0% and 10% by weight of the conductivity improver and
- between 0% and 10% by weight of the additives,
where the percentages are each based on the total mass of the printing composition including solvent or dispersant.

4. Process according to any of Claims 1 to 3, **characterized in that** the printing composition comprises at least one corrosion inhibitor as additive.

5. Process according to any of the preceding claims, **characterized in that** the output conductor structure for the negative electrode is printed onto an electrically nonconductive substrate and then overprinted with the negative electrode layer, or vice versa.

6. Lithium ion battery comprising
- a negative electrode layer,
- a positive electrode layer,
- an output conductor structure for the negative electrode layer,
- an output conductor structure for the positive electrode layer and
- a separator layer to separate the negative and positive electrode layers,
wherein the output conductor structure for the negative electrode layer contains particles of a copper/zinc alloy or of a copper/tin alloy, and also a binder and/or a conductivity improver.

## Revendications

1. Procédé de fabrication de batteries lithium-ion, comprenant les étapes suivantes :
- la formation d'une couche d'électrode négative,
- la formation d'une couche d'électrode positive,
- la préparation d'une structure de décharge pour la couche d'électrode négative,
- la préparation d'une structure de décharge pour la couche d'électrode positive, et
- la préparation d'une couche de séparateur pour la séparation de la couche d'électrode négative et de la couche d'électrode positive,
la structure de décharge pour l'électrode négative étant formée par impression et, pour l'impression, une composition d'impression étant utilisée, qui contient des particules d'un alliage de cuivre/zinc et/ou de cuivre/étain.

2. Procédé selon la revendication 1, **caractérisé en ce que** la composition d'impression contient en plus des particules d'alliage au moins un des composants suivants :
- un solvant ou dispersant,
- un liant,
- un agent d'amélioration de la conductivité et
- des additifs pour influencer les propriétés d'usinage de la composition d'impression et/ou les propriétés de la structure de décharge.

3. Procédé selon la revendication 2, **caractérisé en ce que** la composition d'impression contient :
- entre 0,1 et 10 % en poids du liant,
- entre 25 et 75 % en poids des particules d'alliage,
- entre 0 et 10 % en poids de l'agent d'amélioration de la conductivité et
- entre 0 et 10 % en poids des additifs,
les données de pourcentage se rapportant à chaque fois à la masse totale de la composition d'impression y compris le solvant ou dispersant.

4. Procédé selon l'une quelconque des revendications 1 à 3, **caractérisé en ce que** la composition d'impression contient au moins un inhibiteur de corrosion en tant qu'additif.

5. Procédé selon l'une quelconque des revendications précédentes, **caractérisé en ce que** la structure de décharge pour l'électrode négative est imprimée sur un substrat électriquement non conducteur, puis sur-imprimée avec la couche d'électrode négative, ou inversement.

6. Batterie lithium-ion, comprenant :
- une couche d'électrode négative,
- une couche d'électrode positive,
- une structure de décharge pour la couche d'électrode négative,
- une structure de décharge pour la couche d'électrode positive, et
- une couche de séparateur pour la séparation de la couche d'électrode négative et de la couche d'électrode positive,
la structure de décharge pour l'électrode négative contenant des particules d'un alliage de cuivre/zinc ou de cuivre/étain, ainsi qu'un liant et/ou un agent d'amélioration de la conductivité.
